(19) **Europäisches Patentamt / European Patent Office / Office européen des brevets**

(11) **EP 4 115 233 B1**

(12) # EUROPEAN PATENT SPECIFICATION

(45) Date of publication and mention
of the grant of the patent:
**06.05.2026 Bulletin 2026/19**

(21) Application number: **21764566.2**

(22) Date of filing: **28.02.2021**

(51) International Patent Classification (IPC):
**G02B 30/30** (2020.01) **F21V 8/00** (2006.01)
**H04N 13/31** (2018.01) **G02B 30/33** (2020.01)
**H04N 13/32** (2018.01)

(52) Cooperative Patent Classification (CPC):
**G02B 6/0038; G02B 30/30; G02B 30/33;
H04N 13/32;** G02B 6/005; G02B 6/0055

(86) International application number:
**PCT/US2021/020161**

(87) International publication number:
**WO 2021/178256 (10.09.2021 Gazette 2021/36)**

(54) **ANIMATED STATIC MULTIVIEW DISPLAY AND METHOD**

ANIMIERTE STATISCHE MEHRFACHANSICHTSANZEIGE UND VERFAHREN

DISPOSITIF D'AFFICHAGE MULTI-VUES STATIQUE ANIMÉ ET PROCÉDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.03.2020 US 202062983870 P**

(43) Date of publication of application:
**11.01.2023 Bulletin 2023/02**

(73) Proprietor: **LEIA Inc.
Menlo Park, CA 94025 (US)**

(72) Inventor: **FATTAL, David A.
Menlo Park, California 94025 (US)**

(74) Representative: **Carpmaels & Ransford LLP
One Southampton Row
London WC1B 5HA (GB)**

(56) References cited:
**WO-A1-2018/186892     WO-A1-2018/186906
WO-A1-2018/186906     WO-A2-2009/154957
US-A1- 2006 262 376     US-A1- 2008 204 546
US-A1- 2011 317 261     US-A1- 2020 005 718**

## Description

BACKGROUND

Displays and more particularly 'electronic' displays are a nearly ubiquitous medium for communicating information to users of a wide variety of devices and products. For example, electronic displays may be found in various devices and applications including, but not limited to, mobile telephones (e.g., smart phones), watches, tablet computes, mobile computers (e.g., laptop computers), personal computers and computer monitors, automobile display consoles, camera displays, and various other mobile as well as substantially non-mobile display applications and devices. Electronic displays generally employ a differential pattern of pixel intensity to represent or display an image or similar information that is being communicated. The differential pixel intensity pattern may be provided by reflecting light incident on the display as in the case of passive electronic displays. Alternatively, the electronic display may provide or emit light to provide the differential pixel intensity pattern. Electronic displays that emit light are often referred to as active displays.

WO 2018/186906 A1 relates to a multilayer static multiview display and method of multilayer multiview display operation that provide a plurality of multiview images using diffractive scattering of light from guided light beams having different radial directions. The provided plurality of multiview images may include a composite color multiview image, a static multiview image, or an animated or quasi-static multiview image.

US 2006/262376 A1 relates to a display that comprise: a transmissive pixellated spatial light modulator and a backlight. The backlight has a light-transmissive waveguide, with a first face of the waveguide being opposed to the spatial light modulator.

US 2020/005718 A1 relates to a mode-switchable backlight and mode-switchable privacy display that provide narrow-angle emitted light during a first mode and broad-angle emitted light in a second mode, the broad-angle emitted light being a combination of the narrow-angle emitted light and bidirectional emitted light.

BRIEF DESCRIPTION OF THE DRAWINGS

Various features of examples and embodiments in accordance with the principles described herein may be more readily understood with reference to the following detailed description taken in conjunction with the accompanying drawings, where like reference numerals designate like structural elements, and in which:

Figure 1A illustrates a perspective view of a multiview display in an example, according to an embodiment consistent with the principles described herein.

Figure 1B illustrates a graphical representation of angular components of a light beam having a particular principal angular direction corresponding to a view direction of a multiview display in an example, according to an embodiment consistent with the principles described herein.

Figure 2 illustrates a cross-sectional view of a diffraction grating in an example, according to an embodiment consistent with the principles described herein.

Figure 3A illustrates a perspective view of an animated static display in an example, according to an embodiment consistent with the principles described herein.

Figure 3B illustrates a cross-sectional view of an animated static display in an example, according to an embodiment consistent with the principles described herein.

Figure 3C illustrates another cross-sectional view of an animated static display in an example, according to an embodiment consistent with the principles described herein.

Figure 3D illustrates another cross-sectional view of a portion of an animated static display in another example, according to an embodiment consistent with the principles described herein.

Figure 4 illustrates a plan view of a portion of an animated static display in an example, according to an embodiment consistent with the principles described herein.

Figure 5A illustrates cross-sectional view of a portion of an animated static display in an example, according to an embodiments consistent with the principles described herein.

Figure 5B illustrates cross-sectional view of a portion of an animated static display in an example, according to another embodiment consistent with the principles described herein.

Figure 5C illustrates cross-sectional view of a portion of an animated static display in an example, according to another embodiment consistent with the principles described herein.

Figure 5D illustrates cross-sectional view of a portion of an animated static display in an example, according to yet another embodiment consistent with the principles described herein.

Figure 6 illustrates a block diagram of an animated static display system in an example, according to an embodiment consistent with the principles described herein.

Figure 7 illustrates a flow chart of a method of animated static display operation in an example, according to an embodiment consistent with the principles described herein.

Certain examples and embodiments have other features that are one of in addition to and in lieu of the features illustrated in the above-referenced figures. These and other features are detailed below with reference to the above-referenced figures.

DETAILED DESCRIPTION

The invention is defined in the independent claims. Embodiments of the invention are defined in the dependent claims. Examples and embodiments in accordance with the principles described herein provide display of a plurality of static images that may be displayed according to an animated sequence as an animated static image. In particular, embodiments consistent with the principles described provide a plurality of directional light beams that represent pixels of the static images. As such, individual intensities of directional light beams of the directional light beam plurality, in turn, correspond to intensities or brightness of the pixels in the static image being displayed. Further, according to various embodiments, a plurality of the static multiview images may be provided in a time sequence through a barrier mask to effectively animate the static images as a function of time. Notably, the animated static display does not employ an array of light valves to modulate the directional light beams representing the static image pixels.

Herein, a 'static display' is defined as a display configured to provide a static image. The static image provided by the static display may be a two-dimensional (2D) image or a multiview image. According to various embodiments, a static display may be 'animated' or may provide an 'animated image' when the static display is configured to provide a plurality of static images, e.g., at different times or sequentially.

Herein a 'two-dimensional display' or '2D display' is defined as a display configured to provide a view of an image that is substantially the same regardless of a direction from which the image is viewed (i.e., within a predefined viewing angle or range of the 2D display). In contrast herein, a 'multiview display' is defined as an electronic display or display system configured to provide different views of a multiview image in or from different view directions. In particular, the different views may represent different perspective views of a scene or object of the multiview image. Uses of unilateral backlighting and unilateral multiview displays described herein include, but are not limited to, mobile telephones (e.g., smart phones), watches, tablet computes, mobile computers (e.g., laptop computers), personal computers and computer monitors, automobile display consoles, cameras displays, and various other mobile as well as substantially non-mobile display applications and devices.

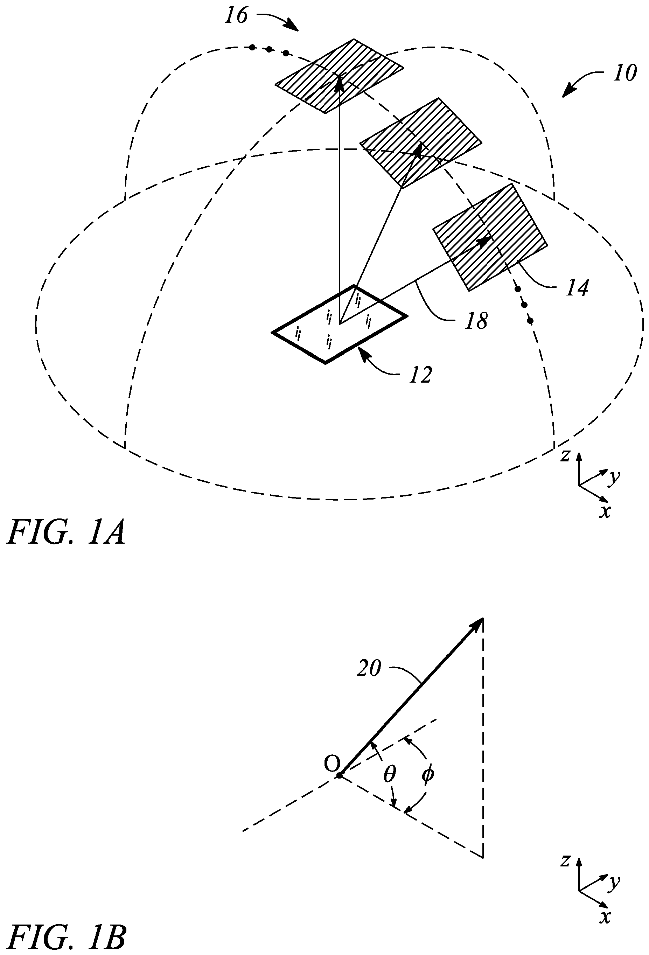

Figure 1A illustrates a perspective view of a multiview display 10 in an example, according to an embodiment consistent with the principles described herein. As illustrated in Figure 1A, the multiview display 10 comprises a diffraction grating on a screen 12 configured to display a view pixel in a view 14 within or of a multiview image 16 (or equivalently a view 14 of the multiview display 10). The screen 12 may be a display screen of an automobile, a telephone (e.g., mobile telephone, smart phone, etc.), a tablet computer, a laptop computer, a computer monitor of a desktop computer, a camera display, or an electronic display of substantially any other device, for example.

The multiview display 10 provides different views 14 of the multiview image 16 in different view directions 18 (i.e., in different principal angular directions) relative to the screen 12. The view directions 18 are illustrated as arrows extending from the screen 12 in various different principal angular directions. The different views 14 are illustrated as shaded polygonal boxes at the termination of the arrows (i.e., depicting the view directions 18). Thus, when the multiview display 10 (e.g., as illustrated in Figure 1A) is rotated about the *y*-axis, a viewer sees different views 14. On the other hand (as illustrated) when the multiview display 10 in Figure 1A is rotated about the x-axis the viewed image is unchanged until no light reaches the viewer's eyes (as illustrated).

Note that, while the different views 14 are illustrated as being above the screen 12, the views 14 actually appear on or in a vicinity of the screen 12 when the multiview image 16 is displayed on the multiview display 10 and viewed by the viewer. Depicting the views 14 of the multiview image 16 above the screen 12 as in Figure 1A is done only for simplicity of illustration and is meant to represent viewing the multiview display 10 from a respective one of the view directions 18 corresponding to a particular view 14. Further, in Figure 1A only three views 14 and three view directions 18 are illustrated, all by way of example and not limitation.

A view direction or equivalently a light beam having a direction corresponding to a view direction of a multiview display generally has a principal angular direction given by angular components $\{\theta, \phi\}$, by definition herein. The angular component $\theta$ is referred to herein as the 'elevation component' or 'elevation angle' of the light beam. The angular component $\phi$ is referred to as the 'azimuth component' or 'azimuth angle' of the light beam. By definition, the elevation angle $\theta$ is an angle in a vertical plane (e.g., perpendicular to a plane of the multiview display screen while the azimuth angle $\phi$ is an angle in a horizontal plane (e.g., parallel to the multiview display screen plane).

Figure 1B illustrates a graphical representation of the angular components $\{\theta, \phi\}$ of a light beam 20 having a particular principal angular direction corresponding to a view direction (e.g., view direction 18 in Figure 1A) of a multiview display in an example, according to an embodiment consistent with the principles described herein. In addition, the light beam 20 is emitted or emanates from a particular point, by definition herein. That is, by definition, the light beam 20 has a central ray associated with a particular point of origin within the multiview display. Figure 1B also illustrates the light beam (or view direction) point of origin O.

Further herein, the term 'multiview' as used in the terms 'multiview image' and 'multiview display' is defined as a plurality of views representing different perspectives or including angular disparity between views of the view plurality. In addition, herein the term 'multiview' explicitly includes more than two different views (i.e., a minimum of three views and generally more than three views), by definition herein. As such, 'multiview display' as employed herein is explicitly distinguished from a stereoscopic display that includes only two different views to represent a scene or an image. Note however, while multiview images and multiview displays may include more than two views, by definition herein, multiview images may be viewed (e.g., on a multiview display) as a stereoscopic pair of images by selecting only two of the multiview views to view at a time (e.g., one view per eye).

In the multiview display, a 'multiview pixel' is defined herein as a set or plurality of view pixels representing pixels in each of a similar plurality of different views of a multiview display. Equivalently, a multiview pixel may have an individual view pixel corresponding to or representing a pixel in each of the different views of the multiview image to be displayed by the multiview display. Moreover, the view pixels of the multiview pixel are so-called 'directional pixels' in that each of the view pixels is associated with a predetermined view direction of a corresponding one of the different views, by definition herein. Further, according to various examples and embodiments, the different view pixels represented by the view pixels of a multiview pixel may have equivalent or at least substantially similar locations or coordinates in each of the different views. For example, a first multiview pixel may have individual view pixels corresponding to view pixels located at $\{x_1, y_1\}$ in each of the different views of a multiview image, while a second multiview pixel may have individual view pixels corresponding to view pixels located at $\{x_2, y_2\}$ in each of the different views, and so on.

In some embodiments, a number of view pixels in a multiview pixel may be equal to a number of views of the multiview display. For example, the multiview pixel may provide eight (8) view pixels associated with a multiview display having 8 different views. Alternatively, the multiview pixel may provide sixty-four (64) view pixels associated with a multiview display having 64 different views. In another example, the multiview display may provide an eight by four array of views (i.e., 32 views) and the multiview pixel may include thirty-two 32 view pixels (i.e., one for each view). Further, according to some embodiments, a number of multiview pixels of the multiview display may be substantially equal to a number of pixels that make up a selected view of the multiview display.

Herein, a 'light guide' is defined as a structure that guides light within the structure using total internal reflection. In particular, the light guide may include a core that is substantially transparent at an operational wavelength of the light guide. In various examples, the term 'light guide' generally refers to a dielectric optical waveguide that employs total internal reflection to guide light at an interface between a dielectric material of the light guide and a material or medium that surrounds that light guide. By definition, a condition for total internal reflection is that a refractive index of the light guide is greater than a refractive index of a surrounding medium adjacent to a surface of the light guide material. In some embodiments, the light guide may include a coating in addition to or instead of the aforementioned refractive index difference to further facilitate the total internal reflection. The coating may be a reflective coating, for example. The light guide may be any of several light guides including, but not limited to, one or both of a plate or slab guide and a strip guide.

Further herein, the term 'plate' when applied to a light guide as in a 'plate light guide' is defined as a piece-wise or differentially planar layer or sheet, which is sometimes referred to as a 'slab' guide. In particular, a plate light guide is defined as a light guide configured to guide light in two substantially orthogonal directions bounded by a top surface and a bottom surface (i.e., opposite surfaces) of the light guide. Further, by definition herein, the top and bottom surfaces are both separated from one another and may be substantially parallel to one another in at least a differential sense. That is, within any differentially small section of the plate light guide, the top and bottom surfaces are substantially parallel or co-planar.

In some embodiments, the plate light guide may be substantially flat (i.e., confined to a plane) and therefore, the plate light guide is a planar light guide. In other embodiments, the plate light guide may be curved in one or two orthogonal dimensions. For example, the plate light guide may be curved in a single dimension to form a cylindrical shaped plate light guide. However, any curvature has a radius of curvature sufficiently large to ensure that total internal reflection is maintained within the plate light guide to guide light.

Herein, a 'diffraction grating' is generally defined as a plurality of features (i.e., diffractive features) arranged to provide diffraction of light incident on the diffraction grating. In some examples, the plurality of features may be arranged in a periodic or quasi-periodic manner having one or more grating spacings between pairs of the features. For example, the diffraction grating may comprise a plurality of features (e.g., a plurality of grooves or ridges in a material surface) arranged in a one-dimensional (1D) array. In other examples, the diffraction grating may be a two-dimensional (2D) array of features. The diffraction grating may be a 2D array of bumps on or holes in a material surface, for example. According to various embodiments and examples, the diffraction grating may be a sub-wavelength grating having a grating spacing or distance between adjacent diffractive features that is less than about a wavelength of light that is to be diffracted by the diffraction grating.

As such, and by definition herein, the 'diffraction grating' is a structure that provides diffraction of light incident on the diffraction grating. If the light is incident on the diffraction grating from a light guide, the provided diffraction or diffractive scattering may result in, and thus be referred to as, 'diffractive coupling' in that the diffraction grating may couple light out of the light guide by diffraction. The diffraction grating also redirects or changes an angle of the light by diffraction (i.e., at a diffractive angle). In particular, as a result of diffraction, light leaving the diffraction grating generally has a different propagation direction than a propagation direction of the light incident on the diffraction grating (i.e., incident light). The change in the propagation direction of the light by diffraction is referred to as 'diffractive redirection' herein. Hence, the diffraction grating may be understood to be a structure comprising diffractive features that diffractively redirects light incident on the diffraction grating and, if the light is incident from a light guide, the diffraction grating may also diffractively couple out the light from the light guide.

Further, by definition herein, the features of a diffraction grating are referred to as 'diffractive features' and may be one or more of at, in and on a material surface (i.e., a boundary between two materials). The surface may be a surface of a light guide, for example. The diffractive features may include any of a variety of structures that diffract light including, but not limited to, one or more of grooves, ridges, holes and bumps at, in or on the surface. For example, the diffraction grating may include a plurality of substantially parallel grooves in the material surface. In another example, the diffraction grating may include a plurality of parallel ridges rising out of the material surface. The diffractive features (e.g., grooves, ridges, holes, bumps, etc.) may have any of a variety of cross-sectional shapes or profiles that provide diffraction including, but not limited to, one or more of a sinusoidal profile, a rectangular profile (e.g., a binary diffraction grating), a triangular profile and a saw tooth profile (e.g., a blazed grating).

As described further below, a diffraction grating herein may have a grating characteristic, including one or more of a feature spacing or pitch, an orientation and a size (such as a width or length of the diffraction grating). Further, the grating characteristic may be selected or chosen to be a function of the angle of incidence of light beams on the diffraction grating, a distance of the diffraction grating from a light source or both. In particular, the grating characteristic of a diffraction grating may be chosen to depend on a relative location of the light source and a location of the diffraction grating, according to some embodiments. By appropriately varying the grating characteristic of the diffraction grating, both an intensity and a principal angular direction of a light beam diffracted (e.g., diffractively coupled-out of a light guide) by the diffraction grating (i.e., a 'directional light beam') corresponds to an intensity and a view direction of a view pixel of the multiview image.

According to various examples described herein, a diffraction grating (e.g., a diffraction grating of a directional scattering element, as described below) may be employed to diffractively scatter or couple light out of a light guide (e.g., a plate light guide) as a light beam. In particular, a diffraction angle $\theta_m$ of or provided by a locally periodic diffraction grating may be given by equation (1) as:

$$\theta_m = \sin^{-1}\left(n \sin\theta_i - \frac{m\lambda}{d}\right) \qquad (1)$$

where $\lambda$ is a wavelength of the light, $m$ is a diffraction order, $n$ is an index of refraction of a light guide, $d$ is a distance or spacing between features of the diffraction grating, $\theta_i$ is an angle of incidence of light on the diffraction grating. For simplicity, equation (1) assumes that the diffraction grating is adjacent to a surface of the light guide and a refractive index of a material outside of the light guide is equal to one (i.e., $n_{out} = 1$). In general, the diffraction order $m$ is given by an integer. A diffraction angle $\theta_m$ of a light beam produced by the diffraction grating may be given by equation (1) where the diffraction order is positive (e.g., $m > 0$). For example, first-order diffraction is provided when the diffraction order $m$ is equal to one (i.e., $m = 1$).

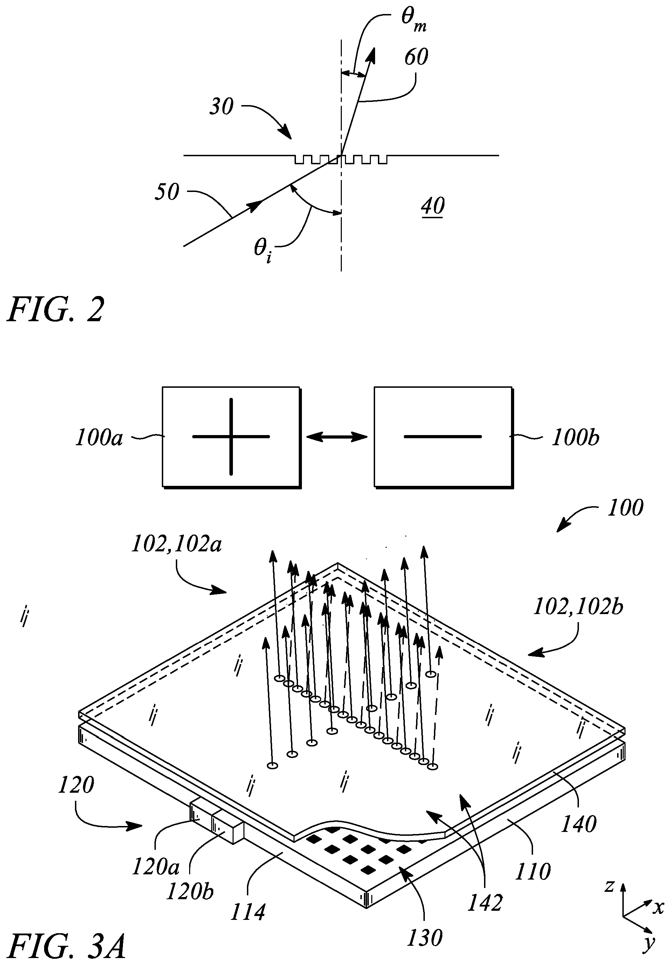

Figure 2 illustrates a cross-sectional view of a diffraction grating 30 in an example, according to an embodiment consistent with the principles described herein. For example, the diffraction grating 30 may be located on a surface of a light guide 40. In addition, Figure 2 illustrates a light beam (or a collection of light beams) 50 incident on the diffraction grating 30 at an incident angle $\theta_i$. The light beam 50 is a guided light beam within the light guide 40. Also illustrated in Figure 2 is a coupled-out light beam (or a collection of light beams) 60 diffractively produced and coupled-out by the diffraction grating 30 as a result of diffraction of the incident light beam 20. The coupled-out light beam 60 has a diffraction angle $\theta_m$ (or 'principal angular direction' herein) as given by equation (1). The coupled-out light beam 60 may correspond to a diffraction order '$m$' of the diffraction grating 30, for example.

According to various embodiments, the principal angular direction of the various light beams is determined by the grating characteristic including, but not limited to, one or more of a size (e.g., a length, a width, an area, etc.) of the diffraction grating, an orientation, and a feature spacing. Further, a light beam produced by the diffraction grating has a principal angular direction given by angular components $\{\theta, \phi\}$, by definition herein, and as described above with respect to Figure 1B.

Herein, a 'collimated light' or 'collimated light beam' is generally defined as a beam of light in which rays of the light beam are substantially parallel to one another within the light beam (e.g., the guided light beam in the light guide). Further, rays of light that diverge or are scattered from the collimated light beam are not considered to be part of the collimated light beam, by definition herein. Moreover, herein a 'collimator' is defined as substantially any optical device or apparatus that is configured to collimate light.

Herein, a 'collimation factor' is defined as a degree to which light is collimated. In particular, a collimation factor defines an angular spread of light rays within a collimated beam of light, by definition herein. For example, a collimation factor $\sigma$ may specify that a majority of light rays in a beam of collimated light is within a particular angular spread (e.g., +/- $\sigma$ degrees about a central or principal angular direction of the collimated light beam). The light rays of the collimated light beam may have a Gaussian distribution in terms of angle and the angular spread be an angle determined by at one-half of a peak intensity of the collimated light beam, according to some examples.

Herein, a 'light source' is defined as a source of light (e.g., an optical emitter configured to produce and emit light). For example, the light source may comprise an optical emitter such as a light emitting diode (LED) that emits light when activated or turned on. In particular, herein the light source may be substantially any source of light or comprise substantially any optical emitter including, but not limited to, one or more of a light emitting diode (LED), a laser, an organic light emitting diode (OLED), a polymer light emitting diode, a plasma-based optical emitter, a fluorescent lamp, an incandescent lamp, and virtually any other source of light. The light produced by the light source may have a color (i.e., may include a particular wavelength of light), or may be a range of wavelengths (e.g., white light). In some embodiments, the light source may comprise a plurality of optical emitters. For example, the light source may include a set or group of optical emitters in which at least one of the optical emitters produces light having a color, or equivalently a wavelength, that differs from a color or wavelength of light produced by at least one other optical emitter of the set or group. The different colors may include primary colors (e.g., red, green, blue) for example.

Embodiments consistent with the principles described herein may be implemented using a variety of devices and circuits including, but not limited to, one or more of integrated circuits (ICs), very large scale integrated (VLSI) circuits, application specific integrated circuits (ASIC), field programmable gate arrays (FPGAs), digital signal processors (DSPs), graphical processor unit (GPU), and the like, firmware, software (such as a program module or a set of instructions), and a combination of two or more of the above. For example, an embodiment or elements thereof may be implemented as circuit elements within an ASIC or a VLSI circuit. Implementations that employ an ASIC or a VLSI circuit are examples of hardware-based circuit implementations.

In another example, an embodiment may be implemented as software using a computer programming language (e.g., C/C++) that is executed in an operating environment or a software-based modeling environment (e.g., MATLAB®, MathWorks, Inc., Natick, MA) that is further executed by a computer (e.g., stored in memory and executed by a processor or a graphics processor of a general purpose computer). Note that one or more computer programs or software may constitute a computer-program mechanism, and the programming language may be compiled or interpreted, e.g., configurable or configured (which may be used interchangeably in this discussion), to be executed by a processor or a graphics processor of a computer.

In yet another example, a block, a module or an element of an apparatus, device or system (e.g., image processor, camera, etc.) described herein may be implemented using actual or physical circuitry (e.g., as an IC or an ASIC), while another block, module or element may be implemented in software or firmware. In particular, according to the definitions herein, some embodiments may be implemented using a substantially hardware-based circuit approach or device (e.g., ICs, VLSI, ASIC, FPGA, DSP, firmware, etc.), while other embodiments may also be implemented as software or firmware using a computer processor or a graphics processor to execute the software, or as a combination of software or firmware and hardware-based circuitry, for example.

Further, as used herein, the article 'a' is intended to have its ordinary meaning in the patent arts, namely 'one or more'. For example, 'a static image' means one or more static images and as such, 'the static image' means 'the static image(s)' herein. Also, any reference herein to 'top', 'bottom', 'upper', 'lower', 'up', 'down', 'front', back', 'first', 'second', 'left' or 'right' is not intended to be a limitation herein. Herein, the term 'about' when applied to a value generally means within the tolerance range of the equipment used to produce the value, or may mean plus or minus 10%, or plus or minus 5%, or plus or minus 1%, unless otherwise expressly specified. Further, the term 'substantially' as used herein means a majority, or almost all, or all, or an amount within a range of about 51% to about 100%. Moreover, examples herein are intended to be illustrative only and are presented for discussion purposes and not by way of limitation.

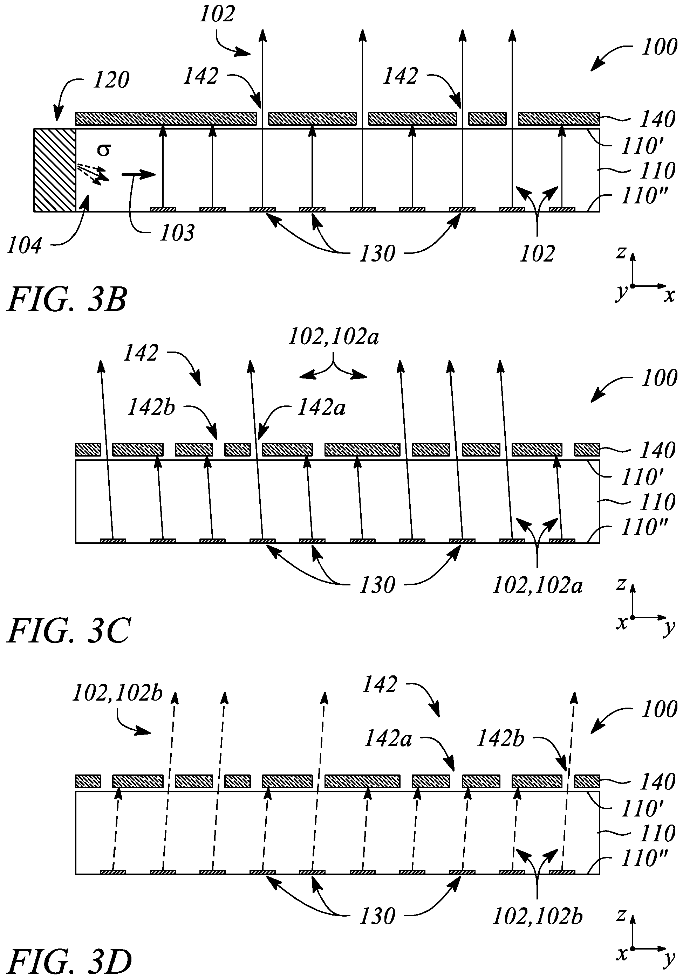

According to some embodiments of the principles described herein, a multiview display configured to provide multiview images and more particularly static multiview images (i.e., a static multiview display) is provided. Figure 3A illustrates a perspective view of an animated static display 100 in an example, according to an embodiment consistent with the principles described herein. Figure 3B illustrates a cross-sectional view of an animated static display 100 in an example, according to an embodiment consistent with the principles described herein. Figure 3C illustrates another cross-sectional view of an animated static display 100 in an example, according to an embodiment consistent with the principles described herein. Figure 3D illustrates another cross-sectional view of a portion of an animated static display 100 in another example, according to an embodiment consistent with the principles described herein. Figure 3C illustrates the animated static display 100 in a first operational condition or mode, while Figure 3D illustrates the animated static display 100 in a second operational condition or mode. Figure 3A illustrates the animated static display 100 in both the first and second operational conditions or modes.

According to some embodiments, the illustrated animated static display 100 is configured to provide a static image in each of the operational conditions or mode. However, when switched between operational conditions or modes the animated static display 100 may provide a plurality of static images. Therefore, the animated static display 100 may provide quasi-static or animated static images, according to various embodiments. In some embodiments, the static image provided by the animated static display 100 may be a two-dimensional (2D) image. In other embodiments, the provided static image may be a multiview static image comprising a plurality of views in different view directions. In these embodiments, the animated static display 100 may be configured to provide an animated multiview static image.

The animated static display 100 illustrated in Figures 3A-3D is configured to provide a plurality of directional light beams 102, each directional light beam 102 of the plurality having an intensity and a principal angular direction. Together, the plurality of directional light beams 102 represent pixels of the static image provided by the animated static display 100. As illustrated in Figures 3A and 3C, a first subset of the directional light beams 102 are emitted as pixels by the animated static display 100 and form a first static image 100a in the first operational condition or mode. In the second operational condition or mode, a second subset of the directional light beams 102 may be emitted by the animated static display 100 as pixels to form a second static image 100b, as illustrated in Figures 3A and 3D. In some embodiments, the pixels may be view pixels of a multiview image and thus may be organized into multiview pixels to represent the various different views of a multiview image corresponding to the different view directions of the multiview image (i.e., a static multiview image).

As illustrated in Figures 3A-3D, the animated static display 100 comprises a light guide 110. The light guide may be a plate light guide (as illustrated), for example. The light guide 110 is configured to guide light along a length of the light guide 110 as guided light 104 or more particularly as guided light beams, in some embodiments. For example, the light guide 110 may include a dielectric material configured as an optical waveguide. The dielectric material may have a first refractive index that is greater than a second refractive index of a medium surrounding the dielectric optical waveguide. The difference in refractive indices is configured to facilitate total internal reflection of the guided light 104 according to one or more guided modes of the light guide 110, for example.

In some embodiments, the light guide 110 may be a slab or plate optical waveguide comprising an extended, substantially planar sheet of optically transparent, dielectric material. The substantially planar sheet of dielectric material is configured to guide the guided light 104 using total internal reflection. According to various examples, the optically transparent material of the light guide 110 may include or be made up of any of a variety of dielectric materials including, but not limited to, one or more of various types of glass (e.g., silica glass, alkali-aluminosilicate glass, borosilicate glass, etc.) and substantially optically transparent plastics or polymers (e.g., poly(methyl methacrylate) or 'acrylic glass', polycarbonate, etc.). In some examples, the light guide 110 may further include a cladding layer (not illustrated) on at least a portion of a surface (e.g., one or both of the top surface and the bottom surface) of the light guide 110. The cladding layer may be used to further facilitate total internal reflection, according to some examples.

According to various embodiments, the light guide 110 is configured to guide the guided light 104 according to total internal reflection at a non-zero propagation angle between a first surface 110' (e.g., a 'front' surface) and a second surface 110" (e.g., a 'back' or 'bottom' surface) of the light guide 110. In particular, the guided light 104 propagates by reflecting or 'bouncing' between the first surface 110' and the second surface 110" of the light guide 110 at the non-zero propagation angle. Figure 3B illustrates the animated static display 100 in a cross-sectional plane that corresponds with a propagation direction of the guided light 104 (e.g., an *x-z* plane, as illustrated). Note, the non-zero propagation angle is not explicitly depicted in Figures 3B for simplicity of illustration. However, Figures 3B does illustrate an arrow depicting a general propagation direction 103 of the guided light 104 along the light guide length.

As defined herein, a 'non-zero propagation angle' is an angle relative to a surface (e.g., the first surface 110' or the second surface 110") of the light guide 110. Further, the non-zero propagation angle is both greater than zero and less than a critical angle of total internal reflection within the light guide 110, according to various embodiments. For example, the non-zero propagation angle of the guided light 104 may be between about ten degrees (10°) and about fifty degrees (50°) or, in some examples, between about twenty degrees (20°) and about forty degrees (40°), or between about twenty-five degrees (25°) and about thirty-five degrees (35°). For example, the non-zero propagation angle may be about thirty (30°) degrees. Moreover, essentially any specific non-zero propagation angle may be chosen (e.g., arbitrarily) for a particular implementation as long as the specific non-zero propagation angle is chosen to be less than the critical angle of total internal reflection within the light guide 110, according to some embodiments.

As illustrated, the animated static display 100 further comprise a plurality of light sources 120. The plurality of light sources 120 is located at an input location on the light guide 110. For example, the light sources 120 of the light source plurality may be located adjacent and optically coupled to an input edge or side 114 of the light guide 110, as illustrated, the input location being a location along the input edge 114. Each of the light sources 120 of the light source plurality is configured to provide light within the light guide 110 to be guided as the guided light 104, e.g., as the plurality of guided light beams of the guided light 104. Further, each of the light sources 120 provides the light such that individual guided light beams of the guided light 104 have different radial directions from one another, in some embodiments. Figure 3A illustrates a first light source 120a a second light source 120b of the plurality of light sources 120, by way of example and not limitation.

Light emitted by each of the light sources 120 is configured enter the light guide 110 and to propagate as guided light 104 away from the input location and across or along a length of the light guide 110. Further, the guided light 104 may comprise the guided light beams having a radial pattern of propagation, where individual guided light beams of the guided light have different radial directions from one another by virtue of the radial pattern of propagation away from the input location. For example, a particular light source 120 of the light source plurality may be butt-coupled to the input edge 114 of the light guide 110. The light source 120 being butt-coupled may facilitate introduction of light in a fan-shape pattern to provide the different radial directions of the individual guided light beams of the guided light 104, for example. According to some embodiments, the light source 120 may be or at least approximate a 'point' source of light at the input location such that the guided light beams of the guided light 104 propagate along the different radial directions (i.e., as the plurality of guided light beams).

In some embodiments, the input location of the light sources 120 is on the input edge 114 of the light guide 110 near or about at a center or a middle of the input edge 114. In particular, in Figure 3A, the light sources 120 are illustrated at an input location that is approximately centered on (e.g., at a middle of) the input edge 114 (i.e., the 'input side') of the light guide 110. Alternatively (not illustrated), the input location may be away from the middle of the input edge 114 of the light guide 110. For example, the input location may be at a corner of the light guide 110.

According to some embodiments, light sources 120 of the light source plurality may be optically coupled to the input edge 114 with the light sources 120 being laterally offset from one another. For example, the second light source 120b may be laterally offset from the first light source 120a along the input edge 114, as illustrated in Figure 3A. The lateral offset shifts a relative direction of the guided light 104 to provide the directional light beams having the different directions, in some embodiments.

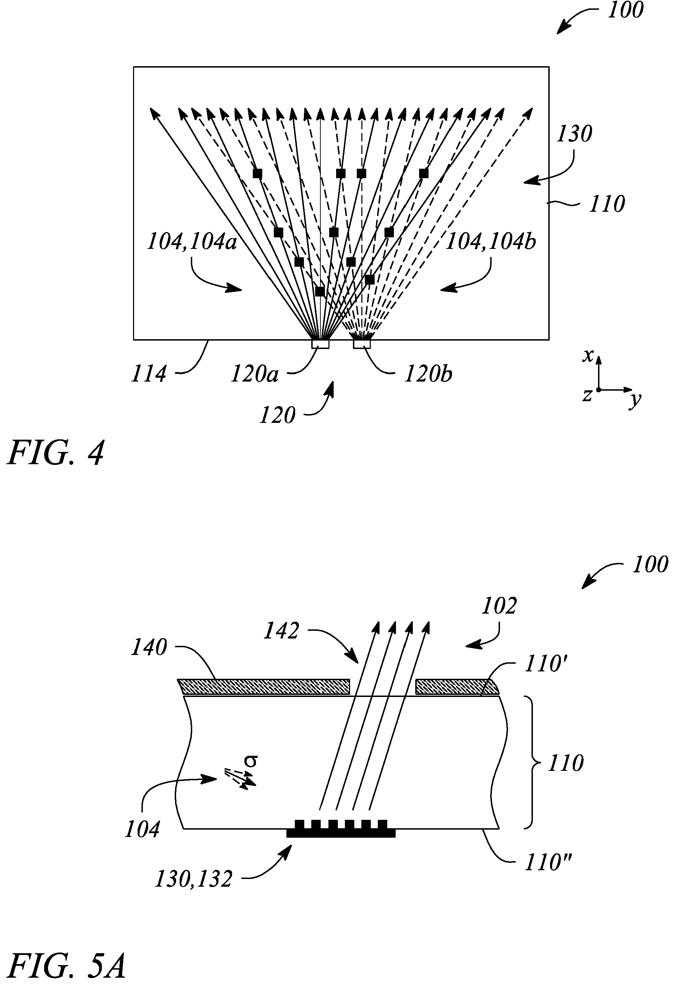

Figure 4 illustrates a plan view of a portion of an animated static display 100 in an example, according to an embodiment consistent with the principles described herein. In particular, the illustrated portion of the animated static display 100 comprises the light guide 110 and the light sources 120 including a first light source 120a and a second light source 120b. As illustrated, the first and second light sources 120a, 120b are attached to the input edge 114 of the light guide 110. The first and second light sources 120a, 120b are also laterally offset from one another along the input edge 114, in Figure 4. A first set of guided light beams 104a of guided light 104 having a radial pattern is illustrated being provided by the first light source 120a is illustrated. Also illustrated is a second set of guided light beams 104b of the guided light 104 being provided by the second light source 120b.

In various embodiments, the light sources 120 of the light source plurality may comprise substantially any source of light (e.g., optical emitter) including, but not limited to, one or more light emitting diodes (LEDs) or a laser (e.g., laser diode). In some embodiments, a light source 120 of the light source plurality may comprise an optical emitter configured produce a substantially monochromatic light having a narrowband spectrum denoted by a particular color. In particular, the color of the monochromatic light may be a primary color of a particular color space or color model (e.g., an RGB color model). In other examples, the light source 120 may be a substantially broadband light source configured to provide substantially broadband or polychromatic light. For example, the light source 120 may provide white light. In some embodiments, the light source 120 may comprise a plurality of different optical emitters configured to provide different colors of light. The different optical emitters may be configured to provide light having different, color-specific, non-zero propagation angles of the guided light 104 corresponding to each of the different colors of light.

In some embodiments, the guided light 104 produced by coupling light from the light source 120 into the light guide 110 may be uncollimated or at least substantially uncollimated. In other embodiments, the guided light 104 may be collimated (i.e., the guided light beams may be collimated light beams). As such, in some embodiments, the animated static display 100 may include a collimator (not illustrated) between the light sources 120 and the light guide 110. Alternatively, the light sources 120 may further comprise a collimator. The collimator is configured to provide guided light 104 within the light guide 110 that is collimated. In particular, the collimator is configured to receive substantially uncollimated light from one or more of the optical emitters of a light sources 120 and to convert the substantially uncollimated light into collimated light. In some examples, the collimator may be configured to provide collimation in a plane (e.g., a 'vertical' plane) that is substantially perpendicular to the propagation direction of the guided light 104 as well as perpendicular to a guiding surface of the light guide (i.e., the first or second surface 110', 110"). That is, the collimation may provide collimated guided light 104 having a relatively narrow angular spread in a plane perpendicular to the guiding surface of the light guide 110, for example. According to various embodiments, the collimator may comprise any of a variety of collimators including, but not limited to a lens, a reflector or mirror (e.g., tilted collimating reflector), or a diffraction grating (e.g., a diffraction grating-based barrel collimator) configured to collimate the light, e.g., from the light sources 120.

Further, in some embodiments, the collimator may provide collimated light one or both of having the non-zero propagation angle and being collimated according to a predetermined collimation factor $\sigma$. Moreover, when optical emitters of different colors are employed, the collimator may be configured to provide the collimated light having one or both of different, color-specific, non-zero propagation angles and having different color-specific collimation factors. The collimator is further configured to communicate the collimated light to the light guide 110 to propagate as the guided light 104, in some embodiments. Use of collimated or uncollimated light may impact the static image that may be provided by the animated static display 100, in some embodiments. For example, if the guided light 104 is collimated according to a collimation factor σ within the light guide 110, the emitted directional light beams 102 may have a relatively narrow or confined angular spread in at least two orthogonal directions that is a function of or determined by the collimation factor σ.

In some embodiments, selective activation of light sources 120 of the light source plurality during the operational conditions or modes is configured to provide animation of the static image. For example, selective activation of the first light source 120a and the second light source 120b may be configured to provide an animated image comprising the first static image and the second static image. Sequential activation of the first light source 120a followed by the second light source 120b may thus facilitate sequential display of the first and second static images, according to some embodiments.

Referring again to Figures 3A-3D, the animated static display 100 further comprises a plurality of directional scattering elements 130 arranged across the light guide 110. Directional scattering elements 130 of the plurality of directional scattering elements 130 are configured to scatter out the guided light as the directional light beams 102. In particular, as illustrated in Figure 3C, the plurality of directional scattering elements 130 is configured to scatter out the guided light 104 as directional light beams 102, 102a having a first direction corresponding to the guided light 104 being provided by a first light source 120a of the light source plurality. Further, the plurality of directional scattering elements 130 is configured to scatter out the guided light 104 as directional light beams 102, 102b having a second direction corresponding to the guided light 104 being provided by a second light source 120b of the light source plurality, as illustrated in Figure 3D. In addition to direction, in some embodiments a directional scattering element 130 may be configured to provide a directional light beams 102 having an intensity corresponding to an intensity of a pixel of the static image. In other embodiments, the directional light beams 102 provided by the directional scattering elements 130 of the directional scattering element plurality all have equivalent or substantially equivalent intensities.

In some embodiments (e.g., as illustrated in Figures 3A-3D), the directional scattering elements 130 of the directional scattering element plurality are arranged in a regular array. In other embodiments (not illustrated), quantities and locations of the directional scattering elements 130 of the directional scattering element plurality correspond to quantities and locations of pixels in the static image. For example, the directional scattering element plurality may represent the static image or at least pixels thereof.

According to various embodiments, the directional scattering elements 130 of the directional scattering element plurality are one or both of adjacent to a guiding surface and between opposing guiding surfaces of the light guide. For example, as illustrated in Figures 3B-3D, the directional scattering elements 130 may be disposed at or adjacent to the second surface 110" of the light guide 110. In other embodiments (not illustrated), the directional scattering elements 130 may be disposed at or adjacent to the first surface 110' of the light guide. In other embodiments (not illustrated), the directional scattering elements 130 may be disposed between and spaced apart from the guiding surfaces.

According to various embodiments, a variety of different scattering structures may be employed as the directional scattering elements 130. In some embodiments, a directional scattering element 130 of the directional scattering element plurality may comprise a diffraction grating configured to diffractively scatter out a portion of the guided light 104 as a directional light beam 102. In some of these embodiments, the diffraction grating may comprise a plurality of sub-gratings located within a border defining the diffraction grating. Further, one or both of a depth of diffractive features and an overall size of the diffraction grating may be used to control a diffractive scattering efficiency and determine an intensity of a directional light beam 102 scattered out by the diffraction grating, in some embodiments.

In some embodiments, a directional scattering element 130 of the directional scattering element plurality may comprise a micro-reflective element configured to reflectively scatter out the portion of the guided light 104 as a directional light beam 102. In some of these embodiments, the micro-reflective element may comprise a plurality of reflective sub-elements located within a border defining the micro-reflective element. Further, a reflectivity of the micro-reflective element (e.g., provided one or both of by a surface reflectivity and a size of the micro-reflective element) may be used to control a reflective scattering efficiency and determine an intensity of a directional light beam 102 scattered out by the micro-reflective element, in some embodiments.

In some embodiments, a directional scattering element 130 of the directional scattering element plurality may comprise a micro-refractive element configured to refractively scatter out the portion of the guided light 104 as a directional light beam 102. In some of these embodiments, the micro-refractive element may comprise a plurality of refractive sub-elements located within a border defining the micro-refractive element. Further, a refractive coupling between the micro-refractive element and the light guide 110 (e.g., provided by a relative difference between refractive indices or by an aperture of the micro-refractive element) may be used to control a refractive scattering efficiency and thus determine an intensity of a directional light beam 102 scattered out by the micro-refractive element, in some embodiments.

In some embodiments, a directional scattering element 130 of the directional scattering element plurality may comprise a micro-slit element having a sloped reflective sidewall with a slope angle tilted away from a propagation direction of the guided light 104 within the light guide. In these embodiments, the sloped reflective sidewall is configured to scatter out the portion of the guided light 104 as a directional light beam. The sloped-reflective sidewall may be coated with a reflective material (e.g., a reflective metal), for example. In some of these embodiments, the micro-slit element may comprise a plurality of micro-slit elements located within a border defining the micro-refractive element. One or both a reflectivity of the reflective sidewall and an overall size of the micro-slit element may be used to control a reflective scattering efficiency and determine an intensity of a directional light beam 102 scattered out by the micro-slit element, in some embodiments.

Referring again to Figures 3A-3D, the animated static display 100 further comprises a barrier layer 140. The barrier layer 140 has a plurality of apertures 142 configured pass directional light beams 102 of the directional light beam plurality. In particular, different sets of the apertures 142 selectively pass directional light beams 102 having different directions. The directional light beams 102 that are passed by the apertures 142 of the barrier layer 140 form the static image or images, according to various embodiments. For example, as illustrated in Figure 3C, the barrier layer 140 comprises a first set 142a of the apertures 142 configured to pass directional light beams 102a having the first direction to provide the first static image 100a. Further, the barrier layer 140 illustrated in Figure 3D comprises a second set 142b of apertures 142 configured to pass directional light beams 102b having the second direction to provide the second static image 100b. Note that the second set 142b of apertures 142 illustrated in Figure 3C are not aligned with the directional light beams 102a having the first direction and therefore do not pass any directional light beams 102a. Similarly, as illustrated in Figure 3D, the first set 142a of apertures 142 are not aligned with the directional light beams 102b having the second direction and therefore do not pass any directional light beams 102b. Further, directional light beams 102, 102a, 102b that do not have a corresponding aperture 142 in the barrier layer 140 are blocked and not passed by the barrier layer 140, according to various embodiments.

The barrier layer 140 may comprise substantially any material that is opaque or substantially opaque to the directional light beams 102. For example, the barrier layer 140 may comprise a black paint, an optically opaque dielectric material (e.g., tinted poly(methyl methacrylate)), a layer of metal (e.g., aluminum, nickel, silver, etc.), or the like. If a metal layer or similar reflective material is used as the barrier layer 140, an absorber may be used to coat the barrier layer 140 to reduce reflection of the directional light beams 102 back into the light guide 110. Further, the barrier layer 140 is substantially opaque to light between the apertures 142 in the barrier layer 140, according to various embodiments.

In some embodiments, a pattern of apertures 142 in the barrier layer 140 defines a pattern of pixels of the static image. For example, a pattern of apertures in the first set 142a of the apertures 142 may define a corresponding pattern of pixels of the first static image 100a. For example, as illustrated in Figure 3A, the first set 142a defines a 'plus' sign that is represented in the first static image 100a. Likewise, a pattern of apertures in the second set 142b of the apertures 142 may define a corresponding pattern of pixels of the second static image 100b, for example. In Figure 3A, the second set 142b defines a 'minus' sign that is represented in the second static image 100b, as illustrated. The aperture pattern may be used to define the pixel pattern of the static image even when the plurality of directional scattering elements 130 is an array without a pattern, e.g., a uniform array.

In some embodiments, an intensity of pixels in the static image is determined by a size of corresponding apertures 142 in the barrier layer 140. That is, a smaller aperture 142 may pass less of the directional light beam 102 and therefore provide a pixel that is less bright than pixel corresponding to a larger aperture 142 that passed more of the directional light beam. In some embodiments, the aperture size alone controls the pixel intensity. In other embodiments, the intensity of pixels of the static image (e.g., of the first and second static images) is determined both by a predetermined scattering efficiency of corresponding directional scattering elements 130 of the directional scattering element plurality and a size of corresponding apertures 142 in the barrier layer 140.

Figure 5A illustrates cross-sectional view of a portion of an animated static display 100 in an example, according to an embodiments consistent with the principles described herein. In particular, Figure 5A illustrates a directional scattering element 130 of the animated static display 100 comprising a diffraction grating 132 configured to diffractively scatter out a portion of the guided light from the light guide 110 as a directional light beam 102. As illustrated, the diffraction grating 132 is located adjacent to a second surface 110" of the light guide 110 of a portion of the animated static display 100. Figure 5A also illustrates a portion of the barrier layer 140 and an aperture 142 corresponding to the directional scattering element 130 and configured to pass the directional light beam 102.

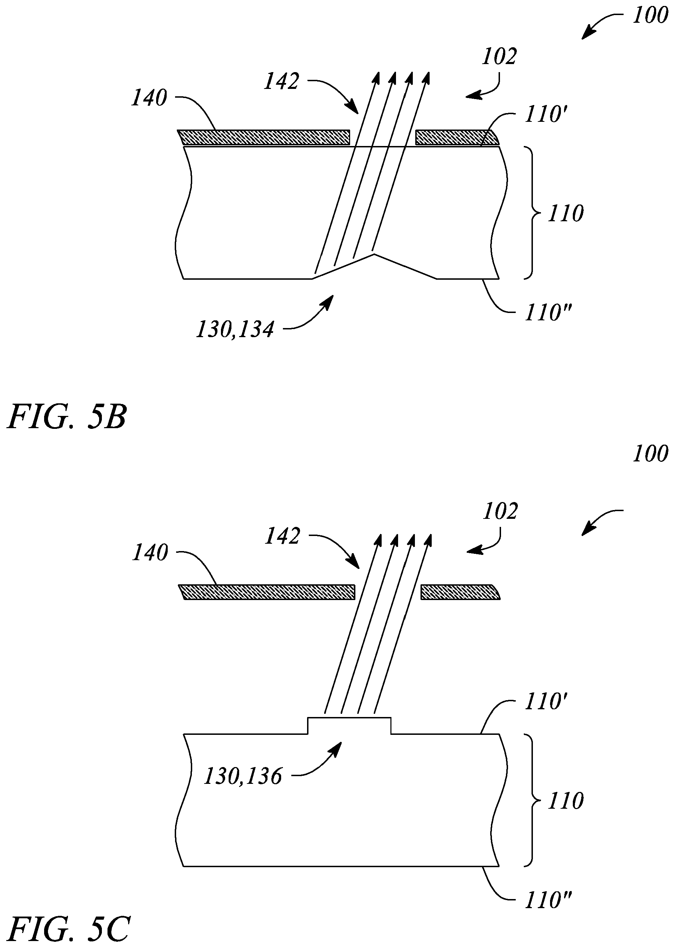

Figure 5B illustrates cross-sectional view of a portion of an animated static display 100 in an example, according to another embodiment consistent with the principles described herein. In particular, Figure 5B illustrates a directional scattering element 130 of the animated static display 100 comprising a micro-reflective element 134 configured to reflectively scatter out a portion of the guided light from the light guide 110 as a directional light beam 102. As illustrated, the micro-reflective element 134 is located adjacent to a second surface 110" of the light guide 110 of a portion of the animated static display 100. Figure 5B also illustrates a portion of the barrier layer 140 and an aperture 142 corresponding to the directional scattering element 130 and configured to pass the directional light beam 102.

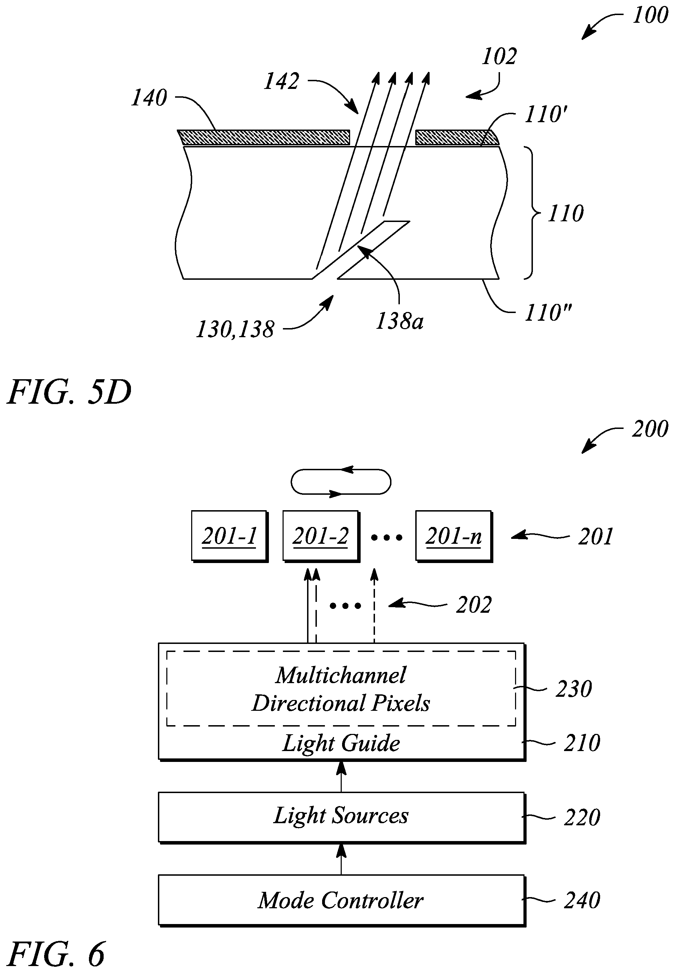

Figure 5C illustrates cross-sectional view of a portion of an animated static display 100 in an example, according to another embodiment consistent with the principles described herein. In particular, Figure 5C illustrates a directional scattering element 130 of the animated static display 100 comprising a micro-refractive element 136 configured to refractively scatter out a portion of the guided light from the light guide 110 as a directional light beam 102. As illustrated, the micro-refractive element 136 is located adjacent to a first surface 110' of the light guide 110 of a portion of the animated static display 100. Figure 5D also illustrates a portion of the barrier layer 140 and an aperture 142 corresponding to the directional scattering element 130 and configured to pass the directional light beam 102.

Figure 5D illustrates cross-sectional view of a portion of an animated static display 100 in an example, according to yet another embodiment consistent with the principles described herein. In particular, Figure 5D illustrates a directional scattering element 130 of the animated static display 100 comprising a micro-slit element 138 having a sloped reflective sidewall 138a configured to reflectively scatter out a portion of the guided light from the light guide 110 as a directional light beam 102. As illustrated, the micro-slit element 138 is located adjacent to a second surface 110" of the light guide 110 of a portion of the animated static display 100. Further, as illustrated, the sloped reflective sidewall is tilted away from a propagation direction of the guided light. Figure 5D also illustrates a portion of the barrier layer 140 and an aperture 142 corresponding to the directional scattering element 130 and configured to pass the directional light beam 102.

In some embodiments (not illustrated in Figures 3A-3D), the animated static display 100 is part of an animated static display system that further comprises a mode controller. The mode controller is configured to sequentially activate the first light source 120a and the second light source 120b to provide an animated image comprising the first static image followed by the second static image, in these embodiments.

In accordance with some embodiments of the principles described herein, an animated static display system is provided. The animated static display system is configured to emit a plurality of directional light beams to provide a plurality of different static images, according to various embodiments. Further, the plurality of different static images may be provided as an animated image. In some embodiments, sets of the directional light beams may have directions corresponding to different viewing directions of a multiview image and one or more of the different static images may be a multiview image. In some examples, the multiview image provide a 'glasses free' (e.g., autostereoscopic) representation of information in the multiview image, for example.

Figure 6 illustrates a block diagram of an animated static image display system 200 in an example, according to an embodiment consistent with the principles described herein. According to various embodiments, the animated static display system 200 is configured to display an animated image comprising different static images 201 (i.e., 201-1, 201-2, ... 201-*n*) of a plurality of different static images 201. In particular, the animated static image display system 200 is configured to provide sets of directional light beams 202 representing pixels of the different static images 201 in the animated image. Different sets of directional light beams 202 are illustrated using different line types (solid, dashed, etc.) in Figure 6. It should be noted that while the directional light beams 202 associated with the various pixels are either static or quasi-static, the directional light beams 202 are not actively modulated to provide the static images 201. Instead, an intensity of the directional light beams 202 along with a direction of those directional light beams 202 defines the pixels of the static images 201 being displayed by the animated static image display system 200, according to various embodiments.

The animated static display system 200 illustrated in Figure 6 comprises a light guide 210. The light guide 210 is configured to guide light as guided light. In some embodiments, the light guide 210 is substantially similar to the light guide 110 described above with respect to the animated static display 100. For example, the light guide 210 may be a plate light guide comprising a dielectric material configured to guide light according to total internal reflection.

As illustrated in Figure 6, the animated static display system 200 further comprises a plurality of light sources 220. The plurality of light sources 220 is optically coupled to an input edge of the light guide. According to various embodiments, light sources 220 of the light source plurality are laterally offset from one another along the input edge. When activated, each of the light sources 220 is configured to provide guided light within the light guide 210 comprising a plurality of guided light beams having different radial directions from one another. That is, each of the light sources 220 may light in a fan-shape or radial pattern to provide the plurality of guided light beams of the guided light having the different radial directions. In some embodiments, the plurality of light sources 220 are substantially similar to the plurality of light sources 120 of the above-described animated static display 100. For example, the plurality of light sources 220 may have a first light source and a second light source that are substantially similar to the first and second light sources 120a, 120b, respectively, of the plurality of light sources 120.

The animated static display system 200, as illustrated in Figure 6, further comprises a plurality of multichannel directional pixels 230. According to various embodiments, different sets of the multichannel directional pixels 230 are configured to provide different static images 201 from the guided light provided by corresponding different light sources of the plurality of light sources 220. In various embodiments, each multichannel directional pixel 230 comprises a directional scattering element and a portion of a barrier layer having an aperture. A directional light beam scattered out of the light guide 210 and through the aperture by the directional scattering element represents a pixel of a static image 201 of the different static images 201, according to various embodiments.

In some embodiments, the directional scattering element of the multichannel directional pixel may be substantially similar to the directional scattering element 130 described above with respect to the animated static display 100. For example, the directional scattering element of a multichannel directional pixel 230 is configured to scatter out a portion of the guided light from the light guide 210 to provide the directional light beam. Further, the barrier layer and aperture in the barrier layer portion may be substantially similar respectively to the barrier layer 140 and aperture 142 of the animated static display 100, as described above. For example, the aperture of the barrier layer portion is configured to pass the directional light beam scattered out by the directional scattering element to represent the static image pixel.

In some embodiments, a pattern of multichannel directional pixels 230 in the different sets defines a corresponding pattern of pixels of the different static images 201. In some embodiments, the barrier layer is opaque to light between the apertures. In some embodiments, the barrier layer is adjacent to and extends over an extent of an output surface of the light guide 210. In some embodiments, directional scattering elements of the multichannel directional pixels 230 are one or both of adjacent to a guiding surface and between opposing guiding surfaces of the light guide 210. In some embodiments, an intensity of pixels of the different static images 201 is determined one or both of by a predetermined scattering efficiency of corresponding directional scattering elements and a size of corresponding apertures in the barrier layer portion of the multichannel directional pixels.

In some embodiments, the directional scattering element of the multichannel directional pixel 230 comprises a diffraction grating configured to diffractively scatter out the portion of the guided light as the directional light beam. In some embodiments, the directional scattering element of the multichannel directional pixel 230 comprises a micro-reflective element configured to reflectively scatter out the portion of the guided light as the directional light beam. In some embodiments, the directional scattering element of the multichannel directional pixel 230 comprises a micro-refractive element configured to refractively scatter out the portion of the guided light as the directional light beam. In some embodiments, the directional scattering element of the multichannel directional pixel 230 comprises a micro-slit element having a sloped reflective sidewall configured to scatter out the portion of the guided light as the directional light beam. In some embodiments, the directional scattering element of the multichannel directional pixel 230 comprises one or more of a diffraction grating, micro-reflective element, a micro-refractive element, and a micro-slit element.

According to various embodiments (e.g., as illustrated in Figure 6), the animated static display system 200 further comprises a mode controller 240. The mode controller 240 is configured to selectively activate the different light sources of the light source plurality. Selective activation, in turn, provides an animated image comprising the different static images 201, according to various embodiments. In some embodiments, the mode controller 240 is configured to sequentially activate the different light sources of the light source plurality to provide the animated image. For example, the mode controller 240 may be configured to sequentially activate a first light source followed by a second light source of the light sources 220, and so on. In turn, sequential activation of the light sources 220 by the mode controller 240 may provide a first static image 201-1 followed by a second static image 201-2, and so on. In various embodiments, the mode controller 240 may be implemented one or both of as hardware comprising circuitry (e.g., an ASIC) and modules comprising software or firmware that are executed by a processor or similar circuitry to various operational characteristics of the mode controller 240.

In some embodiments, the multichannel directional pixels 230 are arranged as multiview pixels configured to provide a static image 201 comprising a plurality of different views and representing a multiview static image. In particular, a set of multichannel directional pixels 230 of the different sets of multichannel directional pixels 230 may be divided up into sub-sets that provide directional light beams having different directions corresponding to view directions of the multiview static image. As such, one or more of the different static images 201 may provide three-dimensional (3D) content when viewed by a viewer. In these embodiments, the animated static display system 200 may be referred to as an multiview animated static display system 200.

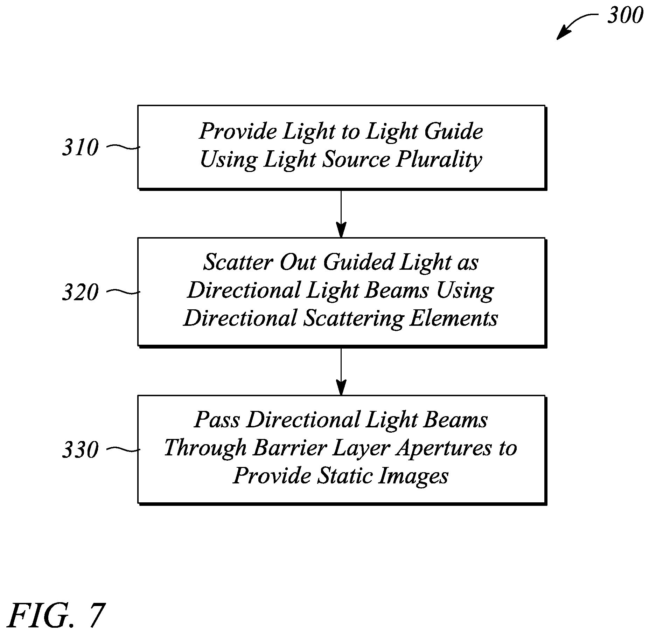

In accordance with other embodiments of the principles described herein, a method of animated static display operation is provided. Figure 7 illustrates a flow chart of a method 300 of animated static display operation in an example, according to an embodiment consistent with the principles described herein. The method 300 of animated static display operation may be used to provide one or both a plurality of static images 201 and an animated image comprising the static image plurality, according to various embodiments.

As illustrated in Figure 7, the method 300 of animated static display operation comprises providing 310 light to a light guide using a plurality of light sources, the provided light being guided as guided light within the light guide. In some embodiments, the light guide may be substantially similar to the light guide 110 of the above-described animated static display 100. Further, the plurality of light sources may be substantially similar to the plurality of light sources 120 described above with respect to the animated static display 100. For example, the light sources of the plurality of light sources may be optically coupled to an input edge of the light guide and laterally offset from one another along the input edge, in some embodiments. Further, in some embodiments, each light source of the light source plurality may provide guided light within the light guide comprising a plurality of guided light beams having different radial directions from one another.

The method 300 illustrated in Figure 7 of animated static display operation further comprises scattering 320 the guided light out of the light guide using a plurality of directional scattering elements arranged across the light guide. Scattering 320 provides a plurality of directional light beams having different directions corresponding to the guided light being provided by different light sources of the light source plurality. According to some embodiments, the plurality of directional scattering elements may be substantially similar to the plurality of directional scattering elements 130 of the animated static display 100, described above. For example, directional scattering elements of the directional scattering element plurality may be one or both of adjacent to a guiding surface and between opposing guiding surfaces of the light guide. In some embodiments, a directional scattering element of the directional scattering element plurality may comprise one or more of a diffraction grating configured to diffractively scatter out the portion of the guided light as a directional light beam, a micro-reflective element configured to reflectively scatter out the portion of the guided light as a directional light beam, a micro-refractive element configured to refractively scatter out the portion of the guided light as a directional light beam, and a micro-slit element having a sloped reflective sidewall configured to scatter out the portion of the guided light as a directional light beam.

According to various embodiments (e.g., as illustrated in Figure 7), the method 300 of animated static display operation further comprises passing 330 directional light beams of the directional light beam plurality through apertures in a barrier layer. Pixels of different static images may be provided by directional light beams passing through different sets of the apertures in the barrier layer, according to various embodiments. In some embodiments, the barrier layer and apertures may be substantially similar to the barrier layer 140 and apertures 142 of the above-described animated static display 100. In some embodiments, an intensity of the pixels of the different static images is determined one or both of by a predetermined scattering efficiency of corresponding directional scattering elements of the directional scattering element plurality and a size of corresponding apertures in the barrier layer.

According to the claimed invention (not illustrated), the method 300 of animated static display operation further comprises sequentially activating different light sources of the light source plurality using a mode controller. In these embodiments, sequentially activating the different light source provides an animated image comprising a plurality of the different static images. According to some embodiments, the mode controller may be substantially similar to the mode controller 240 of the animated static display system 200, described above.

Thus, there have been described examples and embodiments of an animated static display, an animated static display system, and a method of animated static display operation that provide a plurality of different static images that may be animated by selective activation of a corresponding plurality of light sources. It should be understood that the above-described examples are merely illustrative of some of the many specific examples that represent the principles described herein. Clearly, those skilled in the art can readily devise numerous other arrangements without departing from the scope as defined by the following claims.

## Claims

1. An animated static display (100) comprising:

   a light guide (110) configured to guide light as guided light (104);
   a plurality of directional scattering elements (130) arranged across the light guide and configured to scatter out the guided light as directional light beams (102) having a first direction corresponding to the guided light being provided by a first light source (120a) and having a second direction corresponding to the guided light being provided by a second light source (120b); **characterized in that** it further comprises
   a barrier layer (140) comprising a first set of apertures (142a) configured to pass directional light beams having the first direction to provide a first static image (100a) and a second set of apertures (142b) configured to pass directional light beams having the second direction to provide a second static image (100b); and
   wherein selective activation of the first and second light sources is configured to provide an animated image comprising the first static image and the second static image.

2. The animated static display of Claim 1, further comprising the first light source and the second light source, wherein the first and second light sources are optically coupled to an input edge of the light guide, the second light source being laterally offset from the first light source along the input edge.

3. The animated static display of Claim 1, wherein the light guide comprises opposing guiding surfaces, directional scattering elements of the directional scattering element plurality are one or both of adjacent to a guiding surface of the opposing guiding surfaces and between the opposing guiding surfaces of the light guide.

4. The animated static display of Claim 1, wherein a directional scattering element of the directional scattering element plurality comprises one or more of a diffraction grating configured to diffractively scatter out a portion of the guided light as a directional light beam, a micro-reflective element configured to reflectively scatter out a portion of the guided light as a directional light beam, and a micro-refractive element configured to refractively scatter out a portion of the guided light as a directional light beam.

5. The animated static display of Claim 1, wherein a directional scattering element of the directional scattering element plurality comprises a micro-slit element having a sloped reflective sidewall with a slope angle tilted away from a propagation direction of the guided light within the light guide, the sloped reflective sidewall being configured to scatter out the guided light as a directional light beam.

6. The animated static display of Claim 1, wherein a pattern of apertures in the first set of apertures defines a corresponding pattern of pixels of the first static image and a pattern of apertures in the second set of apertures defines a corresponding pattern of pixels of the second static image, the barrier layer being opaque to light between the apertures of the first and second aperture sets.

7. The animated static display of Claim 1, wherein an intensity of pixels of the first and second static images is determined one or both of by a predetermined scattering efficiency of corresponding directional scattering elements of the directional scattering element plurality and a size of corresponding apertures in the barrier layer.

8. An animated static display system comprising the animated static display of Claim 1, further comprising a mode controller configured to sequentially activate the first light source and the second light source to provide an animated image comprising the first static image followed by the second static image.

9. The animated static display of Claim 1, wherein one or more of the first static image and the second static image is a static multiview image.

10. A method of animated static display operation, the method comprising:

providing light to a light guide using a plurality of light sources, the provided light being guided as guided light within the light guide;
scattering the guided light out of the light guide using a plurality of directional scattering elements arranged across the light guide to provide a plurality of directional light beams having different directions corresponding to the guided light being provided by different light sources of the light source plurality;
**characterized in that** it further comprises steps of :

passing directional light beams of the directional light beam plurality through apertures in a barrier layer, pixels of different static images being provided by directional light beams passing through different sets of the apertures in the barrier layer, and
sequentially activating the different light sources of the light source plurality using a mode controller, sequentially activating the different light sources providing an animated image comprising a plurality of different static images.

## Patentansprüche

1. Animierte statische Anzeige (100), umfassend:

einen Lichtleiter (110), der konfiguriert ist, um Licht als geleitetes Licht (104) zu leiten;
eine Vielzahl von gerichteten Streuelementen (130), die in dem gesamten Lichtleiter angeordnet und konfiguriert sind, um das geleitete Licht als gerichtete Lichtstrahlen (102) nach außen zu streuen, die eine erste Richtung, die dem geleiteten Licht entspricht, das von einer ersten Lichtquelle (120a) bereitgestellt wird, und eine zweite Richtung aufweisen, die dem geleiteten Licht entspricht, das von einer zweiten Lichtquelle (120b) bereitgestellt wird; **dadurch gekennzeichnet, dass** sie ferner umfasst:

eine Barriereschicht (140), die einen ersten Satz von Blenden (142a), die konfiguriert sind, um gerichtete Lichtstrahlen durchzulassen, welche die erste Richtung aufweisen, um ein erstes statisches Bild (100a) bereitzustellen, und einen zweiten Satz von Blenden (142b) umfasst, die konfiguriert sind, um gerichtete Lichtstrahlen durchzulassen, welche die zweite Richtung aufweisen, um ein zweites statisches Bild (100b) bereitzustellen; und
wobei eine selektive Aktivierung der ersten und der zweiten Lichtquelle konfiguriert ist, um ein animiertes Bild bereitzustellen, welches das erste statische Bild und das zweite statische Bild umfasst.

2. Animierte statische Anzeige nach Anspruch 1, die ferner die erste Lichtquelle und die zweite Lichtquelle umfasst, wobei die erste und die zweite Lichtquelle mit einer Eingangskante des Lichtleiters optisch gekoppelt sind, wobei die zweite Lichtquelle entlang der Eingangskante seitlich gegenüber der ersten Lichtquelle versetzt ist.

3. Animierte statische Anzeige nach Anspruch 1, wobei der Lichtleiter einander gegenüberliegende Leitflächen umfasst, wobei gerichtete Streuelemente aus der Vielzahl von gerichteten Streuelementen entweder an eine Leitfläche von den einander gegenüberliegenden Leitflächen angrenzen und/oder zwischen den einander gegenüberliegenden Leitflächen des Lichtleiters liegen.

4. Animierte statische Anzeige nach Anspruch 1, wobei ein gerichtetes Streuelement aus der Vielzahl von gerichteten Streuelementen eines oder mehrere ist von:

einem Beugungsgitter, das konfiguriert ist, um einen Teil des geleiteten Lichts als einen gerichteten Lichtstrahl diffraktiv nach außen zu streuen; einem mikroreflektierenden Element, das konfiguriert ist, um einen Teil des geleiteten Lichts als einen gerichteten Lichtstrahl reflektierend nach außen zu streuen; und
einem mikrorefraktiven Element, das konfiguriert ist, um einen Teil des geleiteten Lichts als einen gerichteten Lichtstrahl refraktiv nach außen zu streuen.

5. Animierte statische Anzeige nach Anspruch 1, wobei ein gerichtetes Streuelement aus der Vielzahl von gerichteten Streuelementen ein Mikroschlitzelement umfasst, das eine geneigte reflektierende Seitenwand mit einem Neigungswinkel aufweist, der von einer Ausbreitungsrichtung des geleiteten Lichts innerhalb des Lichtleiters weg geneigt ist, wobei die geneigte reflektierende Seitenwand konfiguriert ist, um das geleitete Licht als einen gerichteten Lichtstrahl nach außen zu streuen.

6. Animierte statische Anzeige nach Anspruch 1, wobei ein Muster von Blenden in dem ersten Satz von Blenden ein entsprechendes Muster von Pixeln des ersten statischen Bildes definiert und ein Muster von Blenden in dem zweiten Satz von Blenden ein entsprechendes Muster von Pixeln des zweiten statischen Bildes definiert, wobei die Barriereschicht zwischen den Blenden des ersten und des zweiten Satzes von Blenden für Licht undurchlässig ist.

7. Animierte statische Anzeige nach Anspruch 1, wobei eine Intensität der Pixel des ersten und des zweiten statischen Bildes entweder durch eine vorbestimmte Streueffizienz von entsprechenden gerichteten Streuelementen aus der Vielzahl von gerichteten Streuelementen und/oder durch eine Größe von entsprechenden Blenden in der Barriereschicht bestimmt wird.

8. Animiertes statisches Anzeigesystem, das die animierte statische Anzeige nach Anspruch 1 umfasst und das ferner eine Modussteuereinheit umfasst, die konfiguriert ist, um die erste Lichtquelle und die zweite Lichtquelle sequenziell zu aktivieren, um ein animiertes Bild bereitzustellen, welches das erste statische Bild gefolgt von dem zweiten statischen Bild umfasst.

9. Animierte statische Anzeige nach Anspruch 1, wobei eines oder mehrere des ersten statischen Bildes und/oder des zweiten statischen Bildes ein statisches Mehrfachansichtsbild sind.

10. Verfahren für eine animierte statische Anzeigeoperation, wobei das Verfahren umfasst:

Bereitstellen von Licht für einen Lichtleiter unter Verwendung einer Vielzahl von Lichtquellen, wobei das bereitgestellte Licht als geleitetes Licht innerhalb des Lichtleiters geleitet wird;
Streuen des geleiteten Lichts aus dem Lichtleiter unter Verwendung einer Vielzahl von gerichteten Streuelementen, die in dem gesamten Lichtleiter angeordnet sind, um eine Vielzahl von gerichteten Lichtstrahlen bereitzustellen, die unterschiedliche Richtungen aufweisen, die dem geleiteten Licht entsprechen, das von verschiedenen Lichtquellen aus der Vielzahl von Lichtquellen bereitgestellt wird;
**dadurch gekennzeichnet, dass** es ferner die folgenden Schritte umfasst:

Durchlassen von gerichteten Lichtstrahlen aus der Vielzahl von gerichteten Lichtstrahlen durch Blenden in einer Barriereschicht, wobei Pixel von unterschiedlichen statischen Bildern durch gerichtete Lichtstrahlen bereitgestellt werden, die unterschiedliche Sätze der Blenden in der Barriereschicht durchlaufen, und
sequenzielles Aktivieren der verschiedenen Lichtquellen aus der Vielzahl von Lichtquellen unter Verwendung einer Modussteuereinheit, welche die verschiedenen Lichtquellen sequenziell aktiviert, die ein animiertes Bild bereitstellen, das eine Vielzahl von verschiedenen statischen Bildern umfasst.

## Revendications

1. Dispositif d'affichage statique animé (100) comprenant :

un conduit de lumière (110) conçu pour guider la lumière sous forme de lumière guidée (104) ;

une pluralité d'éléments de diffusion directionnelle (130) disposés d'un bout à l'autre du conduit de lumière et conçus pour diffuser à l'extérieur la lumière guidée sous forme de faisceaux lumineux directionnels (102) ayant une première direction correspondant à la lumière guidée fournie par une première source de lumière (120a) et ayant une deuxième direction correspondant à la lumière guidée fournie par une deuxième source de lumière (120b) ; **caractérisé en ce qu'**il comprend en outre

une couche barrière (140) comprenant un premier ensemble d'ouvertures (142a) conçues pour laisser passer les faisceaux lumineux directionnels ayant la première direction afin de fournir une première image statique (100a) et un deuxième ensemble d'ouvertures (142b) conçues pour laisser passer les faisceaux lumineux directionnels ayant la deuxième direction afin de fournir une deuxième image statique (100b) ; et

dans lequel l'activation sélective des première et deuxième sources de lumière est conçue pour fournir une image animée comprenant la première image statique et la deuxième image statique.

2. Dispositif d'affichage statique animé de la revendication 1, comprenant en outre la première source de lumière et la deuxième source de lumière, les première et deuxième sources de lumière étant couplées optiquement à un bord d'entrée du conduit de lumière, la deuxième source de lumière étant décalée latéralement de la première source de lumière le long du bord d'entrée.

3. Dispositif d'affichage statique animé de la revendication 1, dans lequel le conduit de lumière comprend des surfaces de guidage opposées, des éléments de diffusion directionnelle de la pluralité d'éléments de diffusion directionnelle sont adjacents à une surface de guidage parmi les surfaces de guidage opposées et/ou se situent entre les surfaces de guidage opposées du conduit de lumière.

4. Dispositif d'affichage statique animé de la revendication 1, dans lequel un élément de diffusion directionnelle de la pluralité d'éléments de diffusion directionnelle comprend un ou plusieurs éléments parmi un réseau de diffraction conçu pour diffuser à l'extérieur par diffraction une partie de la lumière guidée sous la forme d'un faisceau lumineux directionnel, un microélément réfléchissant conçu pour diffuser à l'extérieur par réflexion une partie de la lumière guidée sous la forme d'un faisceau lumineux directionnel, et un microélément réfractif conçu pour diffuser à l'extérieur par réfraction une partie de la lumière guidée sous la forme d'un faisceau lumineux directionnel.

5. Dispositif d'affichage statique animé de la revendication 1, dans lequel un élément de diffusion directionnelle de la pluralité d'éléments de diffusion directionnelle comprend un microélément fendu ayant une paroi latérale réfléchissante inclinée avec un angle d'inclinaison divergeant d'une direction de propagation de la lumière guidée à l'intérieur du conduit de lumière, la paroi latérale réfléchissante inclinée étant conçue pour diffuser à l'extérieur la lumière guidée sous la forme d'un faisceau lumineux directionnel.

6. Dispositif d'affichage statique animé de la revendication 1, dans lequel un motif d'ouvertures dans le premier ensemble d'ouvertures définit un motif correspondant de pixels de la première image statique et un motif d'ouvertures dans le deuxième ensemble d'ouvertures définit un motif correspondant de pixels de la deuxième image statique, la couche barrière étant opaque à la lumière entre les ouvertures des premier et deuxième ensembles d'ouvertures.

7. Dispositif d'affichage statique animé de la revendication 1, dans lequel une intensité de pixels des première et deuxième images statiques est déterminée par une efficacité de diffusion prédéterminée d'éléments de diffusion directionnelle correspondants de la pluralité d'éléments de diffusion directionnelle et/ou une taille d'ouvertures correspondantes dans la couche barrière.

8. Système d'affichage statique animé comprenant le dispositif d'affichage statique animé de la revendication 1, comprenant en outre un contrôleur de mode conçu pour activer successivement la première source de lumière et la deuxième source de lumière afin de fournir une image animée comprenant la première image statique suivie de la deuxième image statique.

9. Dispositif d'affichage statique animé de la revendication 1, dans lequel la première image statique et/ou la deuxième image statique sont des images statiques multivues.

10. Procédé de fonctionnement d'un dispositif d'affichage statique animé, le procédé comprenant :

la fourniture de lumière à un conduit de lumière au moyen d'une pluralité de sources de lumière, la lumière fournie étant guidée sous forme de lumière guidée à l'intérieur du conduit de lumière ;

la diffusion de la lumière guidée hors du conduit de lumière au moyen d'une pluralité d'éléments de diffusion directionnelle disposés d'un bout à l'autre du conduit de lumière pour fournir une pluralité de faisceaux lumineux directionnels ayant différentes directions correspondant à la lumière guidée fournie par différentes sources de lumière de la pluralité de sources de lumière ;

**caractérisé en ce qu'**il comprend en outre les étapes suivantes :

passage de faisceaux lumineux directionnels de la pluralité de faisceaux lumineux directionnels à travers des ouvertures dans une couche barrière, des pixels de différentes images statiques recevant des faisceaux lumineux directionnels traversant différents ensembles des ouvertures dans la couche barrière, et

activation successive des différentes sources de lumière de la pluralité de sources de lumière au moyen d'un contrôleur de mode, l'activation successive des différentes sources de lumière fournissant une image animée comprenant une pluralité d'images statiques différentes.

*FIG. 1A*

*FIG. 1B*

*FIG. 2*

*FIG. 3A*

**FIG. 3B**

**FIG. 3C**

**FIG. 3D**

100

130

110

104,104a    104,104b

114    120a    120b

120

x
z    y

FIG. 4

100

102

140    142    110'

110

104

110"

130,132

FIG. 5A

100

102

140

142

110'

110

130,134

110"

*FIG. 5B*

100

102

140

142

110'

130,136

110

110"

*FIG. 5C*

*FIG. 5D*

*FIG. 6*

*300*

310 —⟨ 
┌─────────────────────────────┐
│ *Provide Light to Light Guide* │
│ *Using Light Source Plurality* │
└─────────────────────────────┘

320 —⟨ 
┌─────────────────────────────┐
│ *Scatter Out Guided Light as* │
│ *Directional Light Beams Using* │
│ *Directional Scattering Elements* │
└─────────────────────────────┘

330 —⟨ 
┌─────────────────────────────┐
│ *Pass Directional Light Beams* │
│ *Through Barrier Layer Apertures to* │
│ *Provide Static Images* │
└─────────────────────────────┘

*FIG. 7*

**EP 4 115 233 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018186906 A1
- US 2006262376 A1
- US 2020005718 A1